# EUROPEAN PATENT SPECIFICATION

(11) **EP 2 679 734 B1**
(45) Date of publication and mention of the grant of the patent: **12.12.2018**
(21) Application number: 12749870.7
(22) Date of filing: 18.01.2012
(51) Int. Cl.: E02F 9/20, E02F 9/00, B60K 6/28, E02F 9/22, E02F 3/32

(54) **ELECTRIC CONSTRUCTION MACHINE**
ELEKTRISCHE BAUMASCHINE
ENGIN DE CHANTIER ÉLECTRIQUE

(30) Priority: 21.02.2011 JP 2011035081
(43) Date of publication of application: 01.01.2014
(73) Proprietor: Hitachi Construction Machinery Tierra Co., Ltd., Koka-shi, Shiga 528-0061 (JP)
(72) Inventor: YUNOUE, Masayuki, Tsuchiura-shi Ibaraki 300-0013 (JP); NOGUCHI, Akira, Tsuchiura-shi Ibaraki 300-0013 (JP); TAKISHITA, Tatsuo, Tsuchiura-shi Ibaraki 300-0013 (JP); KURIKUMA, Hajime, Tsuchiura-shi Ibaraki 300-0013 (JP)
(74) Representative: Manitz Finsterwald Patentanwälte PartmbB
(86) International application number: PCT/JP2012/050999
(87) International publication number: WO 2012/114794

(56) References cited:
- EP-A1- 1 219 751
- EP-A1- 2 221 208
- JP-A- 9 298 806
- JP-A- 9 298 806
- JP-A- 2001 011 888
- JP-A- 2001 011 888
- JP-A- 2008 044 408
- JP-A- 2008 189 215
- JP-A- 2008 189 215
- JP-A- 2009 189 086

## Description

### Technical Field

The present invention relates to an electrically-operated hydraulic excavator and other electric construction machines, and more particularly to electric construction machines having a battery device that serves as an electrical power source for an electric motor.

An electric construction machine comprising the features of the preamble portion of patent claim 1 has been known from EP 1 219 751 A1.

### Background Art

The electrically-operated hydraulic excavator, which is one of the electric construction machines, includes, for example, a hydraulic pump driven by an electric motor, a plurality of hydraulic actuators (or more specifically, a boom hydraulic cylinder, an arm hydraulic cylinder, a bucket hydraulic cylinder, etc.), a plurality of operating means for specifying the operations of the hydraulic actuators, and a plurality of directional control valves for controlling the flow of hydraulic fluid from the hydraulic pump to the hydraulic actuators in accordance with the operations of the operating means.

A known electrically-operated hydraulic excavator has a battery that serves as an electrical power source for an electric motor. The battery is made, for instance, of lead, lithium ions, or nickel hydride and divisible into a minimal unit called a cell. A final commercially-available product of the battery is a module that includes one pack of a plurality of cells. An electrically-operated hydraulic excavator described, for instance, in JP 2008-44408 A has a battery device that includes a plurality of modules (namely, a plurality of batteries).

EP 1 219 751 A1 discloses an electrical construction machine comprising an electric motor; a hydraulic pump that is driven by the electric motor; a plurality of hydraulic actuators that are driven by hydraulic fluid discharged from the hydraulic pump; and a battery device that serves as an electrical power source for the electric motor; wherein the battery device includes a plurality of battery systems that each have a plurality of batteries and are mutually parallel-connected, wherein the electric construction machine includes connection change control means that can change the connections of the battery systems to select one of the battery systems and let the selected battery system supply electrical power to the electric motor.

### Summary of the Invention

### Problem to be Solved by the Invention

However, the above prior art has the following problem. The above-mentioned battery device is formed by series-connecting all the batteries although it is not explicitly described in JP 2008-44408 A. Hence, the electric motor is driven by the electrical power supplied from all the batteries. It means that all the batteries are simultaneously used. Therefore, if the battery device is to be charged because only a small amount of electrical power is stored in the battery device while the electrically-operated hydraulic excavator is operated, for instance, at a construction site, the electrically-operated hydraulic excavator needs to travel to a charging site by using its battery power or travel to the load-carrying platform of a vehicle by using its battery power for the purpose of being carried to the charging site. If all the batteries are exhausted without the knowledge of an operator of the electrically-operated hydraulic excavator, it is difficult to achieve charging because the electrically-operated hydraulic excavator is stopped and unable to travel by using its battery power.

An object of the present invention is to provide an electric construction machine that is capable of avoiding a situation where charging is difficult to achieve due to the exhaustion of all of its batteries.

### Means for Solving the Problem

(1) In accomplishing the above object, according to an aspect of the present invention, there is provided an electric construction machine including an electric motor, a hydraulic pump, a plurality of hydraulic actuators, and a battery device. The hydraulic pump is driven by the electric motor. The hydraulic actuators are driven by hydraulic fluid discharged from the hydraulic pump. The battery device serves as an electrical power source for the electric motor. The battery device includes a plurality of battery systems which each have a plurality of series-connected batteries. The battery systems are mutually parallel-connected. The electric construction machine also includes connection change control means that can change the connections of the battery systems to select one of the battery systems and let the selected battery system supply electrical power to the electric motor, and further includes a plurality of remaining battery power amount acquisition means, motor stop control means, and inverter means. The remaining battery power amount acquisition means acquires information about the amount of electrical power remaining in each of the battery systems. The motor stop control means stops the electric motor when a battery system supplying electrical power to the electric motor is exhausted. The inverter means automatically selects a battery system other than the exhausted battery system when a preselected period of time elapses after the electric motor is stopped by the motor stop control means. The connection change control means changes the connections of the battery systems so that the battery system selected by the inverter means supplies electrical power to the electric motor.
   According to the present invention, which is described above, the battery device includes the battery systems and drives the electric motor by allowing one of the battery systems to supply electrical power. In other words, only one battery system is used at a time. Therefore, even if the electric construction machine stops because the battery system supplying electrical power to the electric motor is exhausted without the knowledge of an operator of the electric construction machine, the connection change control means can switch to another battery system to let it supply electrical power to the electric motor and operate the electric construction machine. As the electric construction machine can travel by using its battery power, it is possible to avoid a situation where charging is difficult to achieve.
(2) According to another aspect of the present invention, there is provided the electric construction machine as described in (1) above, further including manual selection means that is manually operated to select one of the battery systems. The connection change control means changes the connections of the battery systems so that the battery system selected by the manual selection means supplies electrical power to the electric motor.
   Consequently, if a battery system supplying electrical power to the electric motor is exhausted, the electric construction machine is stopped until the operator manually operates the manual selection means. This ensures that the operator certainly becomes aware of the exhausted battery system.
   Consequently, when a battery system supplying electrical power to the electric motor is exhausted, the electric construction machine remains stopped for the predetermined period of time. This ensures that the operator certainly becomes aware of the exhausted battery system.
(3) According to the present invention, there is provided the electric construction machine as described in (1), further including display means for indicating a battery system that supplies electrical power to the electric motor.

### Advantages of the Invention

The present invention makes it possible to avoid a situation where charging is difficult to achieve due to the exhaustion of all batteries.

### Brief Description of Drawings

Fig. 1 is a side view illustrating the overall structure of an electrically-operated hydraulic excavator according to an embodiment of the present invention.
Fig. 2 is a top view illustrating the overall structure of the electrically-operated hydraulic excavator according to the embodiment of the present invention.
Fig. 3 is a hydraulic circuit diagram illustrating the configuration of a hydraulic drive device according to the embodiment of the present invention.
Fig. 4 is a block diagram illustrating the configuration of an inverter device and related equipment according to the embodiment of the present invention.
Fig. 5 is a block diagram illustrating the configuration of a battery device and related equipment according to the embodiment of the present invention.
Fig. 6 is a flowchart illustrating a battery charge control process according to the embodiment of the present invention.
Fig. 7 is a flowchart illustrating a motor drive control process according to the embodiment of the present invention.
Fig. 8 is a flowchart illustrating a motor drive control process according to a modified embodiment of the present invention.
Fig. 9 is a block diagram illustrating the configuration of an inverter device and related equipment according to the modified embodiment of the present invention.

### Best Mode for Carrying Out the Invention

An embodiment of the present invention will now be described with reference to the accompanying drawings on the assumption that the present invention is applied, for instance, to an electrically-operated hydraulic excavator.

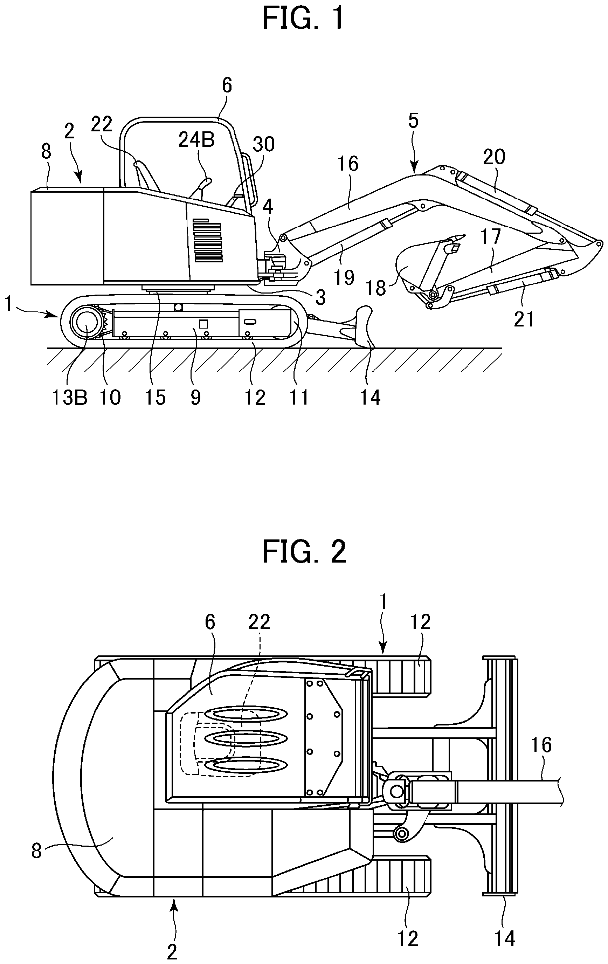

Fig. 1 is a side view illustrating the overall structure of the electrically-operated hydraulic excavator according to the present embodiment. Fig. 2 is a top view. The front side (the right side of Fig. 1), rear side (the left side of Fig. 1), left side (the rear side of Fig. 1), and right side (the front side of Fig. 1) of an operator seated on a cab seat of the electrically-operated hydraulic excavator shown in Fig. 1 are hereinafter simply referred to as the front side, the rear side, the left side, and the right side, respectively.

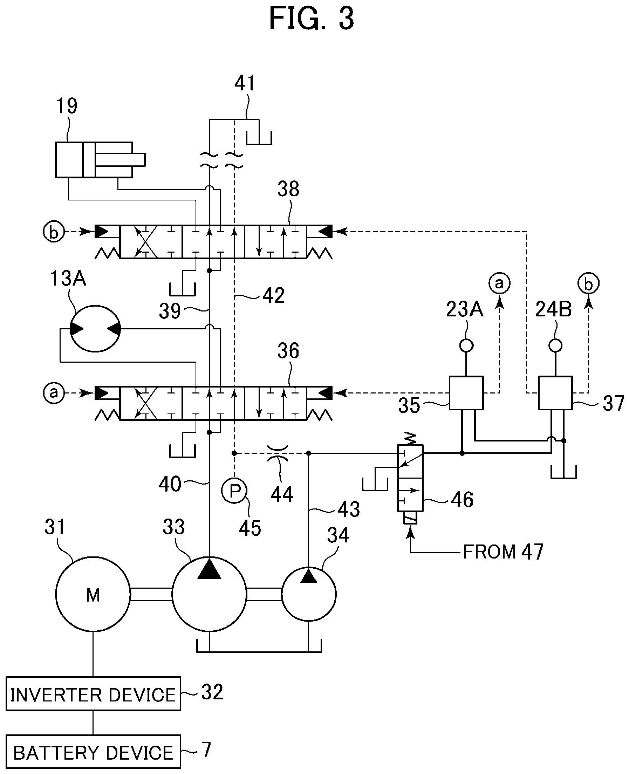

Referring to Figs. 1 and 2, the electrically-operated hydraulic excavator (a mini-excavator having an operating mass of less than 6 tons in the present embodiment) includes a crawler-type lower travel structure 1, an upper turning structure 2, a turning frame 3, a swing post 4, a multi-joint work machine 5, a canopy-type cab 6, and a battery device compartment 8. The upper turning structure 2 is turnably mounted on the lower travel structure 1. The turning frame 3 forms a basic lower structure for the upper turning structure 2. The swing post 4 is mounted on the front side of the turning frame 3 and can be turned in a left-right direction. The multi-joint work machine 5 is coupled to the swing post 4 and can be turned (elevated) in an up-down direction. The canopy-type cab 6 is mounted on the turning frame 3. The battery device compartment 8 is disposed on the rear side of the turning frame 3 to house a battery device 7 (see later-referenced Figs. 3 to 5).

The lower travel structure 1 includes a track frame 9, a pair of left and right driving wheels 10, 10, a pair of left and right driven wheels (idlers) 11, 11, and a pair of left and right crawler belts 12, 12. The track frame 9 is substantially shaped like the letter H when viewed from above. The driving wheels 10, 10 are positioned near the left and right rear ends of the track frame 9 and rotatably supported. The driven wheels 11, 11 are positioned near the left and right front ends of the track frame 9 and rotatably supported. The left and right crawler belts 12, 12 are threaded around the left and right driving wheels 10 and driven wheels 11. The left driving wheel 10 (namely, the left crawler belt 12) is rotationally driven by a left travel hydraulic motor 13A (see later-referenced Fig. 3). The right driving wheel 10 (namely, the right crawler belt 12) rotates when a right travel hydraulic motor 13B is driven.

A blade 14 for earth removal is mounted on the front side of the track frame 9 and can be moved up and down. A blade hydraulic cylinder (not shown) is telescopically driven to move the blade 14 up and down.

A turning wheel 15 is disposed at the center of the track frame 9. The turning frame 3 can be turned through the turning wheel 15. The turning frame 3 (namely, the upper turning structure 2) turns when a turning hydraulic motor (not shown) is driven.

The swing post 4, which is mounted on the front side of the turning frame 3 and can be turned in a left-right direction, turns in the left-right direction when a swing hydraulic cylinder (not shown) is telescopically driven. This causes the work machine 5 to swing in the left-right direction.

The work machine 5 includes a boom 16, an arm 17, and a bucket 18. The boom 16 is coupled to the swing post 4 and can be pivoted in an up-down direction. The arm 17 is coupled to the boom 16 and can be pivoted in an up-down direction. The bucket 18 is coupled to the arm 17 and can be pivoted in an up-down direction. The boom 16, the arm 17, and the bucket 18 are pivoted in the up-down direction by a boom hydraulic cylinder 19, an arm hydraulic cylinder 20, and a bucket hydraulic cylinder 21. The bucket 18 can be replaced, for instance, with an attachment (not shown) in which an optional hydraulic actuator is incorporated.

The cab 6 includes a cab seat (seat) 22 on which the operator sits. Left and right travel control levers 23A, 23B (only the travel control lever 23A is shown in a later-referenced Fig. 3), which can be manipulated in a front-rear direction by a hand or by a foot to specify the operations of the left and right travel hydraulic motors 13A, 13B (namely, the left and right crawler belts 12, 12), are disposed in front of the cab seat 22. An optional control pedal (not shown) is disposed on a base to the left of the left travel control lever 23A. When manipulated in a left-right direction, the optional control pedal specifies the operation of the optional hydraulic actuator (namely, the attachment). A swing control pedal (not shown) is disposed on a base to the right of the right travel control lever 23B. When manipulated in a left-right direction, the swing control pedal specifies the operation of the swing hydraulic cylinder (namely, the swing post 4).

An arm/turning control lever 24A (not shown), which is a cross-directional control lever, is disposed to the left of the cab seat 22. The arm/swing control lever 24A specifies the operation of the arm hydraulic cylinder 20 (namely, the arm 17) when manipulated in a front-rear direction and specifies the operation of the turning hydraulic motor (namely, the upper turning structure 2) when manipulated in a left-right direction. A boom/bucket control lever 24B, which is a cross-directional control lever, is disposed to the right of the cab seat 22. The boom/bucket control lever 24B specifies the operation of the boom hydraulic cylinder 19 (namely, the boom 16) when manipulated in a front-rear direction and specifies the operation of the bucket hydraulic cylinder 21 (namely, the bucket 18) when manipulated in a left-right direction. A blade control lever (not shown) is disposed to the right of the cab seat 22. The blade control lever specifies the operation of the blade hydraulic cylinder (namely, the blade 14) when manipulated in a front-rear direction.

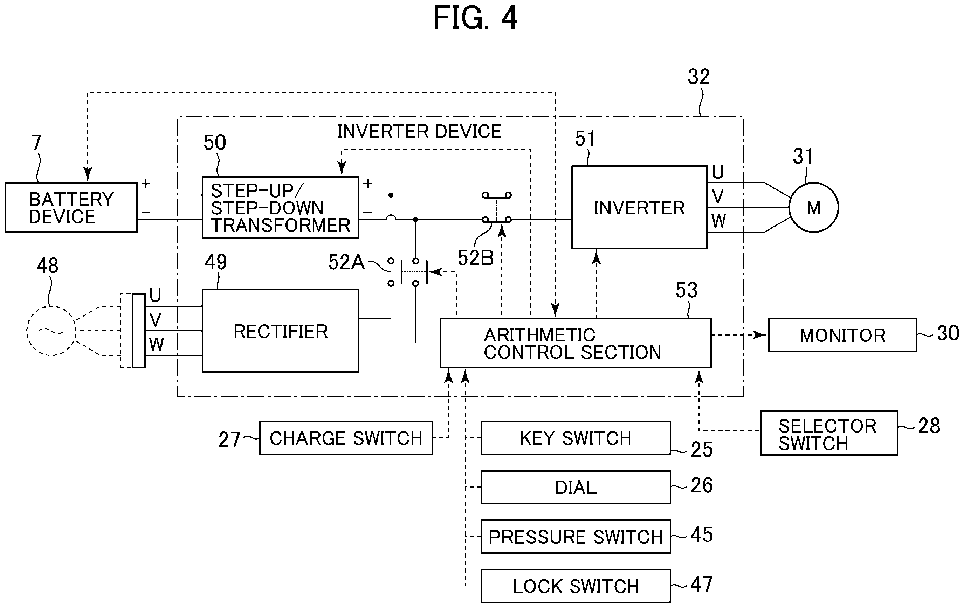

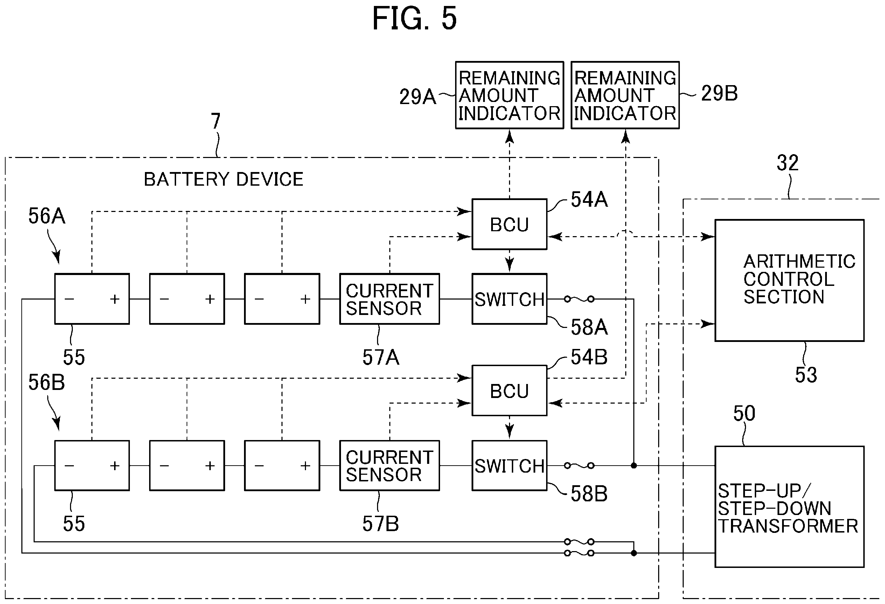

A gate lock lever (not shown) is disposed to the left of the cab seat 22 (namely, on a platform of the cab 6). The gate lock lever is placed in either an unlock position (or more specifically, a descent position for inhibiting the operator from getting into and out of the cab 6) or a lock position (or more specifically, an ascent position for permitting the operator to get into and out of the cab 6). A key switch 25, a dial 26, a charge switch 27, a selector switch 28, remaining amount indicators 29A, 29B (see later-referenced Figs. 4 and 5), and the like are disposed to the right of the cab seat 22. A monitor 30 is disposed to the front right of the cab seat 22.

Fig. 3 is a hydraulic circuit diagram illustrating the configuration of a hydraulic drive device included in the electrically-operated hydraulic excavator described above. Fig. 3 shows the configuration concerning the left travel hydraulic motor 13A and the boom hydraulic cylinder 19 as a representative example.

Referring to Fig. 3, an electric motor 31, the battery device 7, an inverter device 32, a hydraulic pump 33, a pilot pump 34, a hydraulic pilot type operating device 35, and a left travel directional control valve 36 are provided. The battery device 7 serves as an electrical power source for the electric motor 31. The inverter device 32 controls the electrical power supplied to the electric motor 31 in order to control the drive of the electric motor 31. The hydraulic pump 33 and the pilot pump 34 are driven by the electric motor 31. The hydraulic pilot type operating device 35 includes the aforementioned left travel control lever 23A. The left travel directional control valve 36 controls the flow of hydraulic fluid from the hydraulic pump 33 to the left travel hydraulic motor 13A in accordance with the position of the left travel control lever 23A, which is manipulated in a front-rear direction. Also, a hydraulic pilot type operating device 37 and a boom directional control valve 38 are provided. The hydraulic pilot type operating device 37 includes the aforementioned boom/bucket control lever 24B. The boom directional control valve 38 controls the flow of hydraulic fluid from the hydraulic pump 33 to the boom hydraulic cylinder 19 in accordance with the position of the boom/bucket control lever 24B, which is manipulated in a front-rear direction. Although not shown, the configuration concerning the right travel hydraulic motor 13B, the arm hydraulic cylinder 20, the bucket hydraulic cylinder 21, the turning hydraulic motor, the swing hydraulic cylinder, and the blade hydraulic cylinder is substantially the same as described above.

The left travel directional control valve 36, the boom directional control valve 38, and other directional control valves (or more specifically, a right travel directional control valve, an arm directional control valve, a bucket directional control valve, a turning directional control valve, a swing directional control valve, and a blade directional control valve, which are not shown, are included) are of a center bypass type and provided with a center bypass path that is positioned on a center bypass line 39. The center bypass path of each directional control valve is series-connected to the center bypass line 39. When the spool of a directional control valve is in neutral position, the center bypass path of the directional control valve is in communication with the center bypass line 39. When the spool is moved to either the left position or right position shown in Fig. 3, the center bypass path is out of communication with the center bypass line 39. The upstream end of the center bypass line 39 is connected to a discharge line 40 of the hydraulic pump 33, whereas the downstream end of the center bypass line 39 is connected to a tank line 41.

Further, the left travel directional control valve 36, the boom directional control valve 38, and other directional control valves each include a signal path that is positioned on a hydraulic signal line 42. More specifically, the signal path of each directional control valve is series-connected to the hydraulic signal line 42. When the spool of a directional control valve is in neutral position, the signal path of the directional control valve is in communication with the hydraulic signal line 42. When the spool is moved to either the left position or right position shown in Fig. 3, the signal path is out of communication with the hydraulic signal line 42. The upstream end of the hydraulic signal line 42 is connected so that it branches off from a discharge line 43 of the pilot pump 34, whereas the downstream end of the hydraulic signal line 42 is connected to the tank line 41. The upstream end of the most upstream directional control valve 36 in the hydraulic signal line 42 is provided with a fixed restrictor 44. A pressure switch 45 (operation detection means) is disposed between the fixed restrictor 44 and the directional control valve 36. The pressure switch 45 introduces the hydraulic fluid on the upstream side of the directional control valve 36. When the introduced hydraulic fluid reaches a preselected threshold value, the pressure switch 45 closes its contact. Thus, the pressure switch 45 detects whether any of the directional control valves has changed its position, that is, detects whether any of the hydraulic actuators (or more specifically, the left and right travel hydraulic motors 13A, 13B, the boom hydraulic cylinder 19, the arm hydraulic cylinder 20, the bucket hydraulic cylinder 21, the turning hydraulic motor, the switch hydraulic cylinder, and the blade hydraulic cylinder) is operated. If any hydraulic actuator is operated, the pressure switch 45 outputs an ON signal.

The left travel directional control valve 36 changes its position in accordance with a pilot pressure exerted by the operating device 35. The operating device 35 includes the aforementioned left travel control lever 23A and a pair of pressure-reducing valves (pilot valves not shown) that generate the pilot pressure by using the discharge pressure of the pilot pump 34 as a source pressure in accordance with the position of the control lever 23A, which is manipulated in a front-rear direction. When, for instance, the control lever 23A is manipulated from the neutral position into the front position, the pilot pressure generated by one of the pilot valves in accordance with the amount of control lever 23A manipulation is output to a pressure-receiving section of the left travel directional control valve 36 that is disposed on the right side of Fig. 3. The left travel directional control valve 36 is then placed in the right position shown in Fig. 3. This causes the left travel hydraulic motor 13A to rotate in a forward direction and the left driving wheel 10 and crawler belt 12 to rotate in a forward direction. When, on the other hand, the control lever 23A is manipulated from the neutral position into the rear position, the pilot pressure generated by the other pilot valve in accordance with the amount of control lever 23A manipulation is output to a pressure-receiving section of the left travel directional control valve 36 that is disposed on the left side of Fig. 3. The left travel directional control valve 36 is then placed in the left position shown in Fig. 3. This causes the left travel hydraulic motor 13A to rotate in a rearward direction and the left driving wheel 10 and crawler belt 12 to rotate in a rearward direction.

The boom directional control valve 38 changes its position in accordance with a pilot pressure exerted by the operating device 37. The operating device 37 includes, for example, the boom/bucket control lever 24B and a pair of pilot valves (pilot valves not shown) that generate the pilot pressure by using the discharge pressure of the pilot pump 34 as a source pressure in accordance with the position of the control lever 24B, which is manipulated in a front-rear direction. When, for instance, the control lever 24B is manipulated from the neutral position into the front position, the pilot pressure generated by one of the pilot valves in accordance with the amount of control lever 24B manipulation is output to a pressure-receiving section of the boom directional control valve 38 that is disposed on the right side of Fig. 3. The boom directional control valve 38 is then placed in the right position shown in Fig. 3. This causes the boom hydraulic cylinder 19 to contract and the boom 16 to descend. When, on the other hand, the control lever 24B is manipulated into the rear position, the pilot pressure generated by the other pilot valve in accordance with the amount of control lever 24B manipulation is output to a pressure-receiving section of the boom directional control valve 38 that is disposed on the left side of Fig. 3. The boom directional control valve 38 is then placed in the left position shown in Fig. 3. This causes the boom hydraulic cylinder 19 to expand and the boom 16 to ascend.

The discharge line 43 of the pilot pump 34 is provided with a pilot relief valve (not shown) that keeps the discharge pressure of the pilot pump 34 constant. Further, the discharge line 43 of the pilot pump 34 is provided with a lock valve 46. The lock valve 46 changes its position in accordance with the operation of the aforementioned lock lever. More specifically, a lock switch 47 (see later-referenced Fig. 4) is provided. When the lock lever is in the unlock position (the descent position), the lock switch 47 closes. When the lock lever is in the lock position (the ascent position), the lock switch 47 opens. When, for instance, the lock switch 47 closes, a solenoid section of the lock valve 46 is energized through the lock switch 47 so that the lock valve 46 is placed in the lower position shown in Fig. 3. The discharge line 43 of the pilot pump 34 then goes into communication so that the discharge pressure of the pilot pump 34 is introduced into the operating devices 35, 37 and the like. When, on the other hand, the lock switch 47 opens, the solenoid section of the lock valve 46 does not become energized so that the force of a spring places the lock valve 46 in the upper position shown in Fig. 3. This blocks the communication of the discharge line 43 of the pilot pump 34. Consequently, even when, for instance, the operating devices 35, 37 are operated, no hydraulic actuator operates because the pilot pressure is not generated.

Fig. 4 is a block diagram illustrating the configuration of the inverter device 32 and related equipment according to the present embodiment.

Referring to Fig. 4, the inverter device 32 selectively exercises battery charge control and motor drive control. The battery charge control is exercised to supply electrical power from, for example, an external commercial power source 48 to the battery device 7 when a cable from the commercial power source 48 is connected. The motor drive control is exercised to generate AC power based on DC power from the battery device 7 and supplies the generated AC power to the electric motor 31.

The inverter device 32 includes a rectifier 49, a step-up/step-down transformer 50, an inverter 51, a control change switch (normally-open contact relay) 52A, a control change switch (normally-open contact relay) 52B, and an arithmetic control section 53. The rectifier 49 converts an AC voltage of 200 V, which is supplied from the commercial power source 48, to a DC voltage when the battery charge control is exercised. When the battery charge control is exercised, the step-up/step-down transformer 50 functions as a step-down transformer to decrease a DC voltage from the rectifier 49 and supply the decreased DC voltage to the battery device 7. When, on the other hand, the motor drive control is exercised, the step-up/step-down transformer 50 functions as a step-up transformer to increase a DC voltage of approximately 200 V from the battery device 7 to a voltage of approximately 300 V. The inverter 51 generates an alternating current based on a direct current from the step-up/step-down transformer 50 and supplies the generated alternating current to the electric motor 31 when the motor drive control is exercised. The control change switch 52A is disposed between the rectifier 49 and the step-up/step-down transformer 50. The control change switch 52B is disposed between the step-up/step-down transformer 50 and the inverter 51.

The arithmetic control section 53 of the inverter device 32 inputs signals from, for example, the aforementioned key switch 25, dial 26, charge switch 27, selector switch 28, pressure switch 45, and lock switch 47 and can communicate with later-described battery controllers 54A, 54B of the battery device 7. Further, the arithmetic control section 53 controls the step-up/step-down transformer 50, the inverter 51, and the control change switches 52A, 52B and outputs a display signal to the monitor 30.

The key switch 25 includes a key cylinder and a key, which can be inserted into the key cylinder, and outputs a signal in accordance with a position (OFF position, ON position, or START position) into which the key is rotated. The dial 26 specifies a target revolution speed for the electric motor 31, and outputs a signal indicative of the target revolution speed designated by a position into which the dial 26 is rotated. The charge switch 27 specifies whether or not to exercise the battery charge control (turn ON or OFF a battery charge control function), and outputs a signal in accordance with a position (OFF position or ON position) in which the charge switch 27 is placed.

The arithmetic control section 53 of the inverter device 32 exercises the battery charge control when the key switch 25 is found to be placed in the OFF position depending on whether a signal is output from the key switch 25, the charge switch 27 is found to be placed in the ON position depending on whether a signal is output from the charge switch 27, and the cable from the commercial power source 48 is found to be connected depending on whether a signal is output from a cable connection detection circuit (not shown). In other words, the arithmetic control section 53 exercises control to close the control change switch 52A and open the control change switch 52B, and outputs an instruction to the step-up/step-down transformer 50 to decrease the voltage. In accordance with the instruction, the step-up/step-down transformer 50 decreases the DC voltage from the rectifier 49 and supplies the decreased DC voltage to the battery device 7.

When, for instance, the charge switch 27 is found to be placed in the OFF position depending on whether a signal is output from the charge switch 27 while the battery device 7 is being charged, the arithmetic control section 53 of the inverter device 32 outputs a stop instruction to the step-up/step-down transformer 50. In accordance with the stop instruction, the step-up/step-down transformer 50 stops a charge process.

When, for instance, the key switch 25 is found to be placed in the START position depending on whether a signal is output from the key switch 25 and the lock lever is found to be placed in the lock position depending on whether a signal is output from the lock switch 47, the arithmetic control section 53 of the inverter device 32 initiates the motor drive control. In other words, the arithmetic control section 53 exercises control to open the control change switch 52A and close the control change switch 52B, and outputs an instruction to the step-up/step-down transformer 50 to increase the voltage. In accordance with the instruction, the step-up/step-down transformer 50 increases a DC voltage of approximately 200 V from the battery device 7 to a voltage of approximately 300 V. The arithmetic control section 53 also outputs an instruction indicative of a target revolution speed designated by the dial 26 to the inverter 51. In accordance with the instruction, the inverter 51 controls the voltage applied to the electric motor 31 so that the actual revolution speed of the electric motor 31 agrees with the target revolution speed.

When, for instance, all hydraulic actuators are found to be deactivated depending on whether a signal is output from the pressure switch 45 while the electric motor 31 is being driven and a preselected period of time (e.g., 4 seconds) elapses in the above state, the arithmetic control section 53 of the inverter device 32 outputs an instruction to the inverter 51 to indicate a preselected low revolution speed (idle revolution speed). In accordance with the instruction, the inverter 51 controls the voltage applied to the electric motor 31 so that the actual revolution speed of the electric motor 31 agrees with the preselected low revolution speed.

When, for instance, the key switch 25 is found to be placed in the OFF position depending on whether a signal is output from the key switch 25 while the electric motor 31 is being driven, the arithmetic control section 53 of the inverter device 32 outputs a stop instruction to the inverter 51. In accordance with the stop instruction, the inverter 51 stops the electric motor 31.

Fig. 5 is a block diagram illustrating the configuration of the battery device 7 and related equipment, which are essential parts of the present embodiment.

Referring to Fig. 5, the battery device 7 includes a first battery system 56A and a second battery system 56B. The first battery system 56A includes, for example, nine series-connected batteries (namely, modules) 55 (only three representative batteries are shown in Fig. 5). The second battery system 56B includes, for example, nine series-connected batteries 55 (only three representative batteries are shown in Fig. 5). The battery systems 56A, 56B are parallel-connected to each other and connected to the step-up/step-down transformer 50 of the inverter device 32. The battery device 7 also includes a first battery controller 54A, which relates to the first battery system 56A, and a second battery controller 54B, which relates to the second battery system 56B.

Although details are not shown, each battery 55 includes a plurality of cells made, for instance, of lithium ions, and is provided with a cell controller that monitors the cells. Each cell controller in the first battery system 56A acquires information about each battery 55 (or more specifically, the current, voltage, temperature, and other state quantities) and outputs the acquired information to the first battery controller 54A. Similarly, each cell controller in the second battery system 56B acquires information about each battery 55 and outputs the acquired information to the second battery controller 54B.

The positive electrode side of the first battery system 56A (the right side of Fig. 5) is provided with a first current sensor 57A and a first connection change switch (normally-open contact relay) 58A. The positive electrode side of the second battery system 56B (the right side of Fig. 5) is provided with a second current sensor 57B and a second connection change switch (normally-open contact relay) 58B. The first current sensor 57A detects the current of the first battery system 56A and outputs the detected current to the first battery controller 54A. Similarly, the second current sensor 57B detects the current of the second battery system 56B and outputs the detected current to the second battery controller 54B.

The first battery controller 54A computes the amount of electrical power remaining in the first battery system 56A in accordance with the battery information (voltage, etc.) supplied from a plurality of cell controllers and transmits the computed value to the arithmetic control section 53 of the inverter device 32. The first battery controller 54A also determines the level of a charge state indicated by the computed electrical power remaining in the first battery system 56A on a scale, for instance, of ten levels (in which, more specifically, level 0 represents a fully-discharged state whereas level 10 represents a fully-charged state), and outputs a display signal indicative of the determined level to the remaining amount indicator 29A. The remaining amount indicator 29A illuminates/extinguishes, for example, a 10-segment bar to indicate the amount of electrical power remaining in the first battery system 56A on a scale of ten levels.

Similarly, the second battery controller 54B computes the amount of electrical power remaining in the second battery system 56B in accordance with the battery information (voltage, etc.) supplied from a plurality of cell controllers and transmits the computed value to the arithmetic control section 53 of the inverter device 32. The second battery controller 54B also determines the level of a charge state indicated by the computed electrical power remaining in the second battery system 56B on a scale, for instance, of ten levels and outputs a display signal indicative of the determined level to the remaining amount indicator 29B. The remaining amount indicator 29B illuminates/extinguishes, for example, a 10-segment bar to indicate the amount of electrical power remaining in the second battery system 56B on a scale of ten levels.

Further, the first battery controller 54A determines in accordance with the battery information from a plurality of cell controllers whether the first battery system 56A is abnormal. If the first battery system 56A is found to be abnormal, the first battery controller 54A transmits an error signal to the arithmetic control section 53 of the inverter device 32. Similarly, the second battery controller 54B determines in accordance with the battery information from a plurality of cell controllers whether the second battery system 56B is abnormal. If the second battery system 56B is found to be abnormal, the second battery controller 54B transmits an error signal to the arithmetic control section 53 of the inverter device 32.

A major feature of the present embodiment is that the selector switch 28 (see earlier-referenced Fig. 4) selects either one of the battery systems 56A, 56B in accordance with a manual operation, and outputs a selection signal indicative of a position selected by the manual operation. When, for instance, a selection signal for the first battery system 56A is input from the selector switch 28 while the motor drive control is being exercised, the arithmetic control section 53 of the inverter device 32 exercises control to close the first connection change switch 58A through the first battery controller 54A and open the second connection change switch 58B through the second battery controller 54B. This connects the first battery system 56A to the step-up/step-down transformer 50 of the inverter device 32. Further, when, for instance, a selection signal for the second battery system 56B is input from the selector switch 28 while the motor drive control is being exercised, the arithmetic control section 53 of the inverter device 32 exercises control to open the first connection change switch 58A through the first battery controller 54A and close the second connection change switch 58B through the second battery controller 54B. This connects the second battery system 56B to the step-up/step-down transformer 50 of the inverter device 32.

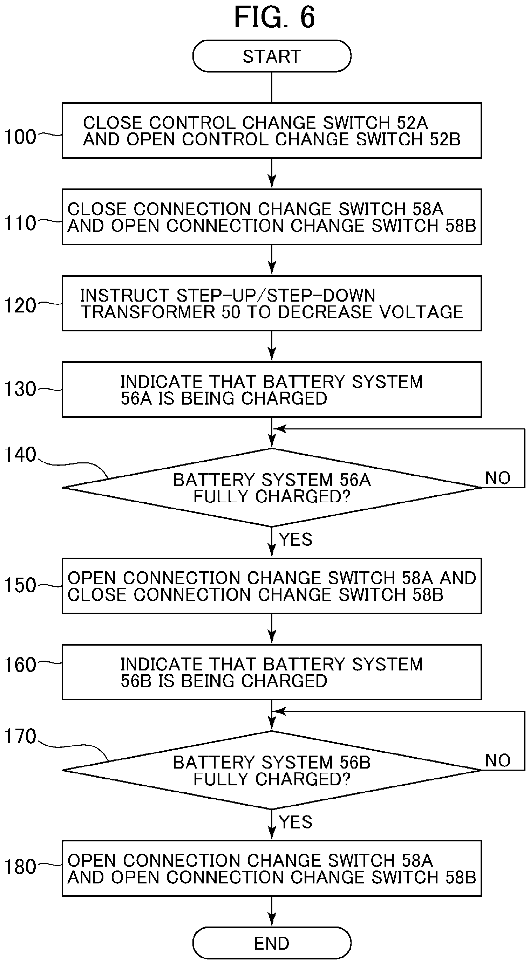

The process for exercising the above-described battery charge control will now be described with reference to Fig. 6. Fig. 6 is a flowchart illustrating the battery charge control process according to the present embodiment.

Referring to Fig. 6, in step 100, the arithmetic control section 53 of the inverter device 32 exercises control to close the control change switch 52A and open the control change switch 52B. Processing then proceeds to step 110. In step 110, if, for instance, the first battery system 56A is selected by the selector switch 28, the arithmetic control section 53 of the inverter device 32 transmits a close instruction signal to the first battery controller 54A and transmits an open instruction signal to the second battery controller 54B. In response to the transmitted instruction signals, the first battery controller 54A exercises control to close the first connection change switch 58A whereas the second battery controller 54B exercises control to open the second connection change switch 58B. This connects the first battery system 56A to the step-up/step-down transformer 50 of the inverter device 32. Next, processing proceeds to step 120. In step 120, the arithmetic control section 53 of the inverter device 32 outputs an instruction to the step-up/step-down transformer 50 to decrease the voltage. The AC voltage of 200 V from the commercial power source 48 is then converted to a DC voltage by the rectifier 49. The resulting DC voltage is decreased by the step-up/step-down transformer 50 and supplied to the first battery system 56A to charge the first battery system 56A.

In the above instance, the first current sensor 57A detects the current of the first battery system 56A and transmits a resulting detection signal to the arithmetic control section 53 of the inverter device 32 through the first battery controller 54A. Processing then proceeds to step 130. In step 130, the arithmetic control section 53 of the inverter device 32 uses the aforementioned detection signal to verify that the first battery system 56A is being charged, and outputs a display signal for the first battery system 56A to the monitor 30. Accordingly, the monitor 30 indicates that the first battery system 56A is being charged. While the first battery system 56A is being charged, the first battery controller 54A successively computes the amount of electrical power remaining in the first battery system 56A, transmits the computed value to the arithmetic control section 53 of the inverter device 32, and causes the remaining amount indicator 29A to display the computed value.

Next, processing proceeds to step 140. In step 140, the arithmetic control section 53 of the inverter device 32 determines whether the first battery system 56A is fully charged. If, for instance, the first battery system 56A is not yet fully charged, the condition in step 140 is not met. Therefore, the arithmetic control section 53 continuously causes the first battery system 56A to be charged until the condition is met. However, if an error signal is received from the battery controller 54A or from the battery controller 54B, the arithmetic control section 53 outputs a stop instruction to the step-up/step-down transformer 50 to stop a charge process. In this instance, the arithmetic control section 53 outputs an error display signal to the monitor 30 and outputs a drive signal to a buzzer (not shown). This causes the monitor 30 to illuminate its abnormality indicator lamp and the buzzer to sound.

When, for instance, the first battery system 56A is fully charged, the condition in step 140 is met so that processing proceeds to step 150. In step 150, the arithmetic control section 53 of the inverter device 32 transmits an open instruction signal to the first battery controller 54A and transmits a close instruction signal to the second battery controller 54B. In response to the transmitted instruction signals, the first battery controller 54A exercises control to open the first connection change switch 58A whereas the second battery controller 54B exercises control to close the second connection change switch 58B. This connects the second battery system 56B to the step-up/step-down transformer 50 of the inverter device 32. Hence, the AC voltage of 200 V from the commercial power source 48 is converted to a DC voltage by the rectifier 49. The resulting DC voltage is decreased by the step-up/step-down transformer 50 and supplied to the second battery system 56B to charge the second battery system 56B.

In the above instance, the second current sensor 57B detects the current of the second battery system 56B and transmits a resulting detection signal to the arithmetic control section 53 of the inverter device 32 through the second battery controller 54B. Processing then proceeds to step 160. In step 160, the arithmetic control section 53 of the inverter device 32 uses the aforementioned detection signal to verify that the second battery system 56B is being charged, and outputs a display signal for the second battery system 56B to the monitor 30. Accordingly, the monitor 30 indicates that the second battery system 56B is being charged. While the second battery system 56B is being charged, the second battery controller 54B successively computes the amount of electrical power remaining in the second battery system 56B, transmits the computed value to the arithmetic control section 53 of the inverter device 32, and causes the remaining amount indicator 29B to display the computed value.

Next, processing proceeds to step 170. In step 170, the arithmetic control section 53 of the inverter device 32 determines whether the second battery system 56B is fully charged. If, for instance, the second battery system 56B is not yet fully charged, the condition in step 170 is not met. Therefore, the arithmetic control section 53 continuously causes the second battery system 56B to be charged until the condition is met. However, if an error signal is received from the battery controller 54A or from the battery controller 54B, the arithmetic control section 53 outputs a stop instruction to the step-up/step-down transformer 50 to stop a charge process. In this instance, the arithmetic control section 53 outputs an error display signal to the monitor 30 and outputs a drive signal to the buzzer. This causes the monitor 30 to illuminate its abnormality indicator lamp and the buzzer to sound.

When, for instance, the second battery system 56B is fully charged, the condition in step 170 is met so that processing proceeds to step 180. In step 180, the arithmetic control section 53 of the inverter device 32 transmits an open instruction signal to the second battery controller 54B. In response to the transmitted instruction signal, the second battery controller 54B exercises control to open the second connection change switch 58B. This disconnects the battery systems 56A, 56B from the step-up/step-down transformer 50 of the inverter device 32, thereby terminating the battery charge control.

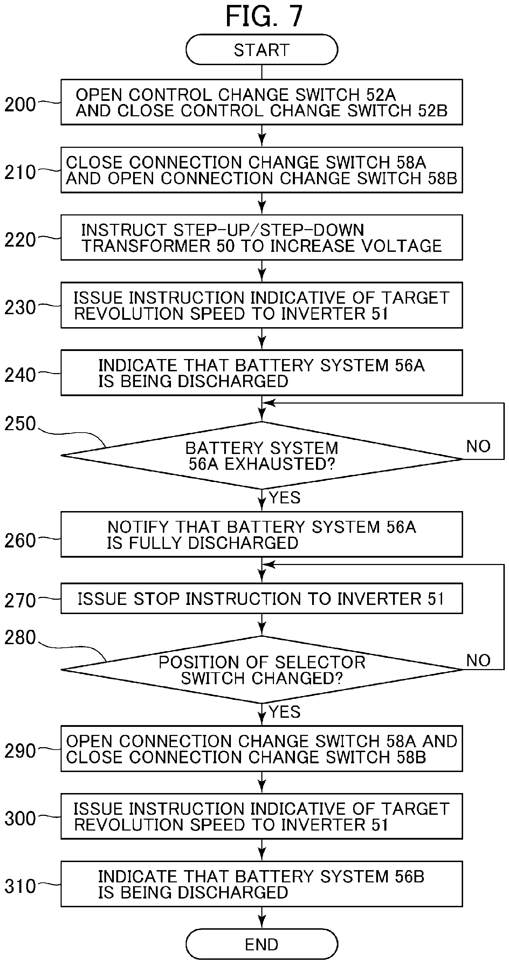

The process for exercising the above-described motor drive control will now be described with reference to Fig. 7. Fig. 7 is a flowchart illustrating the motor drive control process according to the present embodiment.

Referring to Fig. 7, in step 200, the arithmetic control section 53 of the inverter device 32 exercises control to open the control change switch 52A and close the control change switch 52B. Processing then proceeds to step 210. In step 210, if, for instance, the first battery system 56A is selected by the selector switch 28, the arithmetic control section 53 of the inverter device 32 transmits a close instruction signal to the first battery controller 54A and transmits an open instruction signal to the second battery controller 54B. In response to the transmitted instruction signals, the first battery controller 54A exercises control to close the first connection change switch 58A whereas the second battery controller 54B exercises control to open the second connection change switch 58B. This connects the first battery system 56A to the step-up/step-down transformer 50 of the inverter device 32. Next, processing proceeds to step 220. In step 220, the arithmetic control section 53 of the inverter device 32 outputs an instruction to the step-up/step-down transformer 50 to increase the voltage. Processing then proceeds to step 230. In step 230, the arithmetic control section 53 of the inverter device 32 outputs an instruction indicative of a target revolution speed to the inverter 51. The DC voltage from the first battery system 56A is then increased by the step-up/step-down transformer 50. Next, an AC voltage is generated by the inverter 51 based on the increased DC voltage and is supplied to the electric motor 31 to drive the electric motor 31.

In the above instance, the first current sensor 57A detects the current of the first battery system 56A and transmits a resulting detection signal to the arithmetic control section 53 of the inverter device 32 through the first battery controller 54A. Processing then proceeds to step 240. In step 240, the arithmetic control section 53 of the inverter device 32 uses the aforementioned detection signal to verify that the first battery system 56A is being discharged, and outputs a display signal for the first battery system 56A to the monitor 30. Accordingly, the monitor 30 indicates that the first battery system 56A is being discharged. While the first battery system 56A is being discharged, the first battery controller 54A successively computes the amount of electrical power remaining in the first battery system 56A, transmits the computed value to the arithmetic control section 53 of the inverter device 32, and causes the remaining amount indicator 29A to display the computed value.

Next, processing proceeds to step 250. In step 250, the arithmetic control section 53 of the inverter device 32 determines whether no electrical power remains in the first battery system 56A (that is, whether the first battery system 56A is fully discharged). If, for instance, the first battery system 56A is not yet fully discharged, the condition in step 250 is not met. Therefore, the arithmetic control section 53 continuously causes the electric motor 31 to be driven (that is, causes the first battery system 56A to be discharged) until the condition is met. However, if an error signal is received from the battery controller 54A or from the battery controller 54B, the arithmetic control section 53 outputs a stop instruction to the step-up/step-down transformer 50 and to the inverter 51 to stop the electric motor 31. In this instance, the arithmetic control section 53 outputs an error display signal to the monitor 30 and outputs a drive signal to the buzzer. This causes the monitor 30 to illuminate its abnormality indicator lamp and the buzzer to sound.

When, for instance, the first battery system 56A is fully discharged, the condition in step 250 is met so that processing proceeds to step 260. In step 260, the arithmetic control section 53 of the inverter device 32 transmits a display signal to the remaining amount indicator 29A through the first battery controller 54A to indicate that the first battery system 56A is fully discharged. To give such an indication in accordance with the display signal, the remaining amount indicator 29A, for example, blinks only the both ends of the 10-segment bar. Processing then proceeds to step 270. In step 270, the arithmetic control section 53 of the inverter device 32 outputs a stop instruction to the inverter 51 to stop the electric motor 31 (motor stop means). In this instance, a drive signal is output to the buzzer to sound the buzzer.

Next, processing proceeds to step 280. In step 280, the selection signal from the selector switch 28 is used to determine whether the selector switch 28 is operated to select the second battery system 56B. If, for instance, the selector switch 28 is not operated and the second battery system 56B is not selected, the condition in step 280 is not met. Therefore, processing returns to step 270 to repeat the above-described steps.

When, for instance, the selector switch 28 is operated to select the second battery system 56B, the condition in step 280 is met so that processing proceeds to step 290. In step 290, the arithmetic control section 53 of the inverter device 32 transmits an open instruction signal to the first battery controller 54A and transmits a close instruction signal to the second battery controller 54B. In response to the transmitted instruction signals, the first battery controller 54A exercises control to open the first connection change switch 58A whereas the second battery controller 54B exercises control to close the second connection change switch 58B. This connects the second battery system 56B to the step-up/step-down transformer 50 of the inverter device 32. Next, processing proceeds to step 300. In step 300, an instruction indicative of a target revolution speed is output to the inverter 51. Hence, the DC voltage from the second battery system 56B is increased by the step-up/step-down transformer 50. An AC voltage is then generated by the inverter 51 based on the increased DC voltage and supplied to the electric motor 31 to drive the electric motor 31.

In the above instance, the second current sensor 57B detects the current of the second battery system 56B and transmits a resulting detection signal to the arithmetic control section 53 of the inverter device 32 through the second battery controller 54B. Processing then proceeds to step 310. In step 310, the arithmetic control section 53 of the inverter device 32 uses the aforementioned detection signal to verify that the second battery system 56B is being discharged, and outputs a display signal for the second battery system 56B to the monitor 30. Accordingly, the monitor 30 indicates that the second battery system 56B is being discharged. While the second battery system 56B is being discharged, the second battery controller 54B successively computes the amount of electrical power remaining in the second battery system 56B, transmits the computed value to the arithmetic control section 53 of the inverter device 32, and causes the remaining amount indicator 29B to display the computed value.

In the present embodiment configured as described above, the battery device 7 includes the two battery systems 56A, 56B so that either one of them supplies electrical power to drive the electric motor 31. In other words, only one battery system is used at a time. Therefore, even if the electrically-operated hydraulic excavator stops because the battery system supplying electrical power to the electric motor 31 is exhausted without the knowledge of the operator, the selector switch 28 can be manually operated to switch to the other battery system and let the other battery system supply electrical power to the electric motor 31. This makes it possible to operate the electrically-operated hydraulic excavator. Consequently, as the electrically-operated hydraulic excavator can travel by using its battery power, it is possible to avoid a situation where charging is difficult to achieve.

In the present embodiment, if a battery system supplying electrical power to the electric motor 31 is exhausted, the electrically-operated hydraulic excavator is stopped until the operator operates the selector switch 28. This ensures that the operator certainly becomes aware of the exhausted battery system. Further, the operator can feel the length of time during which the excavator is available, that is, the interval between the instant at which a battery system is fully charged and the instant at which it is fully discharged. Therefore, after switching from one battery system to another, the operator can predict the maximum length of time during which the currently selected battery system can be used. This makes it possible to plan the timing of charging.

Furthermore, only one of the two battery systems 56A, 56B can be fully charged to operate the electrically-operated hydraulic excavator. This make is possible to reduce the time required for charging. Moreover, the length of time of use and the number of charge and discharge processes vary from one battery system to another. This causes battery replacement periods to vary from one battery system to another. Therefore, unlike the case where all the batteries are series-connected so that their replacement periods are the same, it is possible to decrease the number of batteries to be replaced at a time and reduce the replacement cost of each battery.

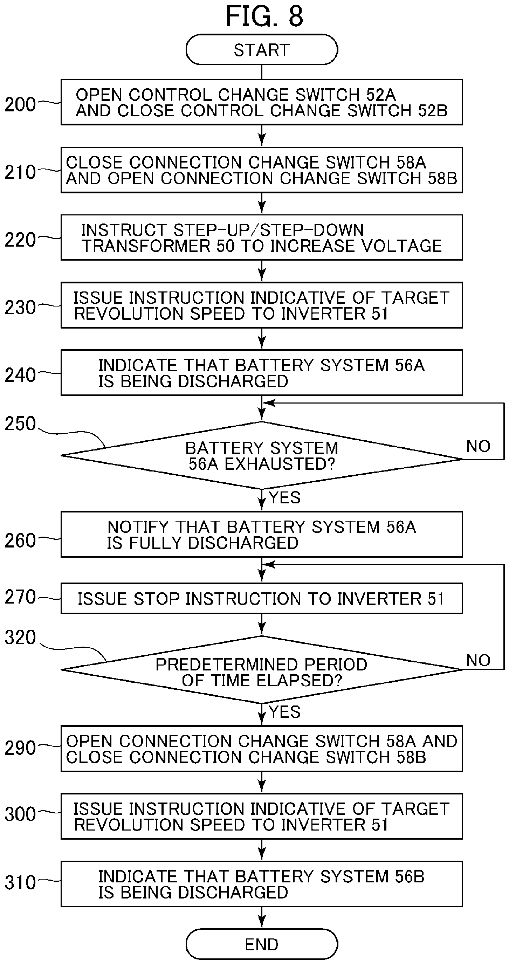

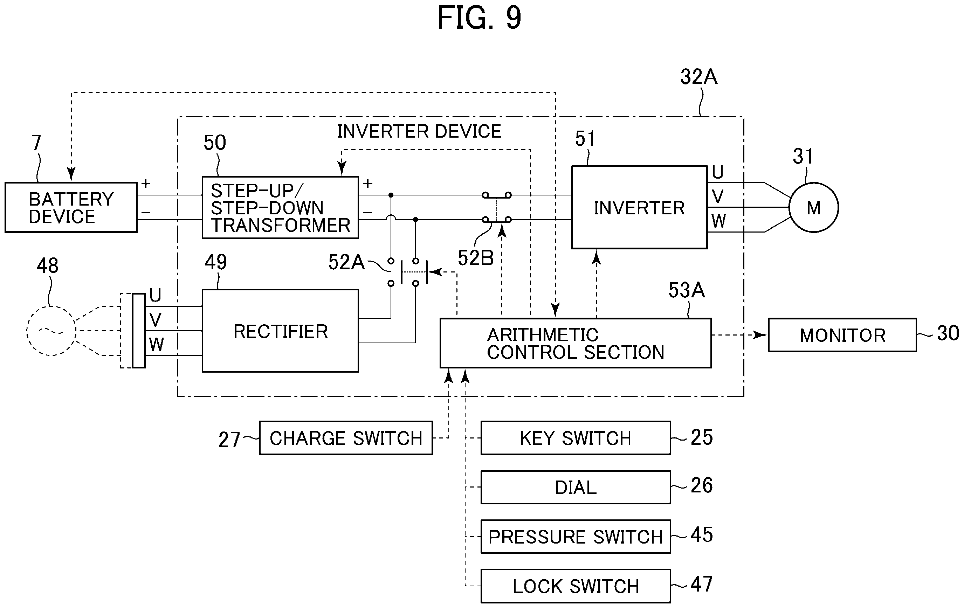

The foregoing preferred embodiment has been described on the assumption that the connection status of each battery system 56A, 56B is changed in accordance with a manual operation of the selector switch 28. However, the present invention is not limited to such a battery system connection status change. For example, an alternative is to stop the electric motor 31 when a battery system supplying electrical power to the electric motor 31 is exhausted, and then after the elapse of a preselected period of time, automatically switch to another battery system. A motor drive control process according to such a modified embodiment will now be described with reference to Fig. 8. Fig. 8 is a flowchart illustrating the motor drive control process according to the modified embodiment. Fig. 9 is a block diagram illustrating the configuration of an inverter device 32A and related equipment according to the modified embodiment. Portions equal to those of the foregoing preferred embodiment will not be redundantly described.

In the modified embodiment, as is the case with the foregoing preferred embodiment, an arithmetic control section 53A of the inverter device 32A determines in step 250 whether the first battery system 56A is exhausted (namely, fully discharged). If, for instance, the first battery system 56A supplying electrical power to the electric motor 31 is fully discharged, the condition in step 250 is met so that processing proceeds to step 260. In step 260, the arithmetic control section 53A of the inverter device 32A causes the remaining amount indicator 29A to indicate that the first battery system 56A is fully discharged. The arithmetic control section 53A of the inverter device 32A then proceeds to step 270 and stops the electric motor 31. Next, the arithmetic control section 53A of the inverter device 32A proceeds to step 320 and determines whether a preselected period of time has elapsed. Before the elapse of the preselected period of time, the condition in step 320 is not met so that the arithmetic control section 53A of the inverter device 32A returns to step 270 and repeats the same steps.

When the preselected period of time has elapsed, the condition in step 320 is met so that processing proceeds to step 290. In step 290, the arithmetic control section 53A of the inverter device 32A transmits an open instruction signal to the first battery controller 54A and transmits a close instruction signal to the second battery controller 54B. In response to the transmitted instruction signals, the first battery controller 54A exercises control to open the first connection change switch 58A whereas the second battery controller 54B exercises control to close the second connection change switch 58B. This connects the second battery system 56B to the step-up/step-down transformer 50 of the inverter device 32A. Next, processing proceeds to step 300. In step 300, an instruction indicative of a target revolution speed is output to the inverter 51. Hence, the DC voltage from the second battery system 56B is increased by the step-up/step-down transformer 50. An AC voltage is then generated by the inverter 51 based on the increased DC voltage and supplied to the electric motor 31.

The above-described modified embodiment also avoids a situation where charging is difficult to achieve due to the exhaustion of all batteries, as is the case with the foregoing preferred embodiment. In addition, in the modified embodiment, the electrically-operated hydraulic excavator remains stopped for a predetermined period of time when a battery system supplying electrical power to the electric motor 31 is exhausted. This ensures that the operator certainly becomes aware of the exhausted battery system.

Further, the battery device 7 according to the foregoing preferred embodiment is configured so that the battery systems 56A, 56B have the same number of batteries 55. However, the present invention is not limited to such a battery device configuration. Alternatively, the battery systems 56A, 56B may differ in the number of batteries 55. For example, the first battery system 56A may include twelve series-connected batteries 55 whereas the second battery system 56B may include six series-connected batteries 55. Furthermore, the battery device 7 according to the foregoing preferred embodiment has been described on the assumption that it includes two battery systems 56A, 56B. However, the present invention is not limited to such a battery device configuration. Alternatively, the battery device 7 may include three or more battery systems. For example, the battery device 7 may include three battery systems that each have six series-connected batteries 55. The modified embodiment described above provides the same advantages as the foregoing preferred embodiment.

In the foregoing description, it is assumed that the electrically-operated hydraulic excavator includes, for instance, the left and right travel hydraulic motors 13A, 13B and the turning hydraulic motor as hydraulic actuators other than the work machine hydraulic actuators (or more specifically, the boom hydraulic cylinder 19, the arm hydraulic cylinder 20, and the bucket hydraulic cylinder 21). However, the present invention is not limited to such a configuration. For example, the electrically-operated hydraulic excavator may include left and right travel electric motors, which are driven by electrical power supplied from the battery device 7, instead of the left and right travel hydraulic motors 13A, 13B. Further, the electrically-operated hydraulic excavator may include a turning electric motor, which is driven by electrical power supplied from the battery device 7, instead of the turning hydraulic motor. The above-described modified embodiment also provides the same advantages as the foregoing preferred embodiment. Moreover, it is obvious that the present invention is applicable not only to the electrically-operated hydraulic excavator but also to the other electric construction machines.

### Description of Reference Numerals

7... Battery device
13A... Left travel hydraulic motor
13B... Right travel hydraulic motor
19... Boom hydraulic cylinder
20... Arm hydraulic cylinder
21... Bucket hydraulic cylinder
28... Selector switch (manual selection means)
30... Monitor (display means)
31... Electric motor
32... Inverter device (connection change control means, motor stop control means)
32A... Inverter device (connection change control means, motor stop control means, automatic selection means)
33... Hydraulic pump
54A... First battery controller (remaining battery power amount acquisition means)
54B... Second battery controller (remaining battery power amount acquisition means)
55... Battery
56A... First battery system
56B... Second battery system
58A... First connection change switch (connection change control means)
58B... Second connection change switch (connection change control means)

## Claims

1. An electric construction machine comprising:
an electric motor (31);
a hydraulic pump (33) that is driven by the electric motor (31);
a plurality of hydraulic actuators (13A, 13B, 19 to 21) that are driven by hydraulic fluid discharged from the hydraulic pump (33); and
a battery device (7) that serves as an electrical power source for the electric motor (31);
wherein the battery device (7) includes a plurality of battery systems (56A, 56B) that each have a plurality of batteries (55) and are mutually parallel-connected,
wherein the electric construction machine includes connection change control means (32, 54A, 54B, 58A, 58B; 32A, 54A, 54B, 58A, 58B) that can change the connections of the battery systems (56A, 56B) to select one of the battery systems (56A, 56B)and let the selected battery system supply electrical power to the electric motor (31),
**characterized by**
display means (30) for indicating a battery system that supplies electrical power to the electric motor (31),
and in that the batteries are series connected,
and by further comprising:
a plurality of remaining battery power amount acquisition means (54A, 54B) that acquires information about the amount of electrical power remaining in each of the battery systems;
motor stop control means (32) that stops the electric motor when a battery system supplying electrical power to the electric motor is exhausted; and
inverter means (32A) that automatically selects a battery system other than the exhausted battery system when a preselected period of time elapses after the electric motor is stopped by the motor stop control means;
wherein the connection change control means (32, 54A, 54B, 58A, 58B) changes the connections of the battery systems so that the battery system selected by the inverter means supplies electrical power to the electric motor.

2. The electric construction machine according to claim 1, further comprising:
manual selection means (28) that is manually operated to select one of the battery systems;
wherein the connection change control means (32, 54A, 54B, 58A, 58B) changes the connections of the battery systems so that the battery system selected by the manual selection means supplies electrical power to the electric motor.

## Patentansprüche

1. Elektrische Baumaschine, umfassend:
einen Elektromotor (31);
eine Hydraulikpumpe (33), die vom Elektromotor (31) angetrieben wird;
eine Vielzahl von hydraulischen Stellgliedern (13A, 13B, 19 bis 21), die durch Hydraulikfluid angetrieben werden, das von der Hydraulikpumpe (33) abgegeben wird; und
eine Batterievorrichtung (7), die als eine elektrische Energiequelle für den Elektromotor (31) dient;
wobei die Batterievorrichtung (7) eine Vielzahl von Batteriesystemen (56A, 56B) umfasst, die jeweils eine Vielzahl von Batterien (55) aufweisen und die zueinander parallel geschaltet sind,
wobei die elektrische Baumaschine ein Verbindungsänderungssteuermittel (32, 54A, 54B, 58A, 58B; 32A, 54A, 54B, 58A, 58B) umfasst, welches die Verbindungen der Batteriesysteme (56A, 56B) ändern kann, um eines der Batteriesysteme (56A, 56B) auszuwählen und um das ausgewählte Batteriesystem dem Elektromotor (31) elektrische Energie zuführen zu lassen,
**gekennzeichnet durch**
ein Anzeigemittel (30) zum Anzeigen eines Batteriesystems, das dem Elektromotor (31) elektrischen Strom zuführt,
und **dadurch, dass** die Batterien in Reihe geschaltet sind, und durch ferner Umfassen von:
einer Vielzahl von Restbatterieleistungsmengenerfassungsmitteln (54A, 54B), die Informationen über die Menge an elektrischer Energie erhält, die in jedem der Batteriesysteme verbleibt;
einem Motorstoppsteuermittel (32), das den Elektromotor anhält, wenn ein Batteriesystem, das dem Elektromotor elektrische Leistung zuführt, erschöpft ist; und
einem Wechselrichtermittel (32A), das automatisch ein anderes Batteriesystem als das erschöpfte Batteriesystem auswählt, wenn eine vorgewählte Zeitperiode, nachdem der Elektromotor durch das Motorstoppsteuermittel angehalten worden ist, verstrichen ist; wobei das Verbindungsänderungssteuermittel (32, 54A, 54B, 58A, 58B) die Verbindungen der Batteriesysteme ändert, so dass das durch das Wechselrichtermittel ausgewählte Batteriesystem elektrische Energie an den Elektromotor liefert.

2. Elektrische Baumaschine nach Anspruch 1, ferner umfassend:
ein handbetätigbares Auswahlmittel (28), das von Hand betätigt wird, um eines der Batteriesysteme auszuwählen;
wobei das Verbindungsänderungssteuermittel (32, 54A, 54B, 58A, 58B) die Verbindungen der Batteriesysteme ändert, so dass das durch das handbetätigbare Auswahlmittel ausgewählte Batteriesystem dem Elektromotor elektrische Energie zuführt.

## Revendications

1. Engin de construction électrique comprenant :
un moteur électrique (31),
une pompe hydraulique (33) qui est entraînée par le moteur électrique (31)
une pluralité d'actionneurs hydrauliques (13A, 13B,19 à 21) qui sont entraînés par un liquide hydraulique fourni par la pompe hydraulique (33) et,
un dispositif de batterie (7) qui sert en tant que source d'alimentation électrique pour le moteur électrique (31),
le dispositif de batterie (7) comprenant une pluralité de systèmes de batterie (56A,56B) qui ont chacun une pluralité de batteries (55) et sont réciproquement connectés en parallèle,
l'engin de construction électrique comprenant des moyens de commande (32,54A,54B,58A,58B,32A,54A,54B,58A,58B) qui peuvent changer les connexions des systèmes de batterie (56A,56B) pour sélectionner un des systèmes de batterie (56A, 56B) et laisser le système de batterie sélectionné assurer l'alimentation électrique au moteur électrique (31),
**caractérisé par**
un moyen d'affichage (30) pour indiquer un système de batterie qui fournit une alimentation électrique au moteur électrique (31),
et en ce que les batteries sont connectées en série,
et comprenant en plus :
une pluralité de moyens d'acquisition d'une quantité de puissance de batterie résiduelle (54A,54B) qui collecte des informations concernant la quantité d'alimentation électrique restant dans chacun des systèmes de batterie,
un moyen de commande d'arrêt du moteur (32) qui arrête le moteur électrique lorsque le système de batterie fournissant l'alimentation électrique au moteur électrique est épuisé, et
un moyen d'inversion (32A) qui sélectionne automatiquement un système de batterie autre que le système de batterie épuisé lorsqu'une période présélectionnée de temps s'écoule une fois le moteur électrique arrêté par le moyen de commande d'arrêt du moteur,
le moyen de commande de changement de connexion (32, 54A,54B, 58A, 58B) changeant les connexions des systèmes de batterie de telle manière que le système de batterie sélectionné par le moyen d'inversion fournit l'alimentation électrique au moteur électrique.

2. Engin de construction électrique selon la revendication 1, comprenant en plus :
un moyen de sélection manuel (28) qui est actionné manuellement pour sélectionner un des systèmes de batterie,
le moyen de commande de changement de connexion (32, 54A,54B, 58A, 58B) changeant les connexions des systèmes de batterie de telle manière que le système de batterie sélectionné par le moyen de sélection manuel fournit l'alimentation électrique au moteur électrique.
